# EUROPÄISCHE PATENTANMELDUNG

(11) **EP 3 553 107 A1**
(43) Veröffentlichungstag der Anmeldung: **16.10.2019**
(21) Anmeldenummer: 18167401.1
(22) Anmeldetag: 13.04.2018
(51) Int. Cl.: C08G 18/50, C08G 18/76, C08G 18/16, C08G 18/18, C08G 18/22, C08G 18/40, C08G 18/42

(54) **VERFAHREN ZUR HERSTELLUNG VON POLYURETHAN/POLYISOCYANURAT (PUR/PIR) - HARTSCHAUMSTOFFEN**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die Erfindung betrifft ein Verfahren zur Herstellung von Polyurethan/Polyisocyanurat-Hartschäumen durch Umsetzung eines speziellen Reaktionsgemisches in Anwesenheit einer Katalysatorkomponente enthaltend Kaliumformiat und die nach diesem Verfahren hergestellten Polyurethan/Polyisocyanurat-Hartschäume.

## Beschreibung

Die Erfindung betrifft ein Verfahren zur Herstellung von Polyurethan/Polyisocyanurat (PUR/PIR) - Hartschaumstoffen umfassend den Schritt i) Umsetzung eines Reaktionsgemisches enthaltend
A) eine Polyisocyanatkomponente und
B) eine Isocyanat-reaktive Komponente umfassend
   B1) eine Polyolkomponente,
   B2) eine Katalysatorkomponente,
   B3) gegebenenfalls Hilfs- und Zusatzstoffe, und
C) ein physikalisches Treibmittel
dadurch gekennzeichnet,
dass die Katalysatorkomponente B2.a) Kaliumformiat enthält, und
dass das Reaktionsgemisch aus Schritt i) weniger als 0,3 Gew.-% Wasser und weniger als 0,2 Gew.-% Ameisensäure enthält und einen Isocyanat-Index ≥ 150 aufweist.

Polyurethan/Polyisocyanurat (PUR/PIR) - Hartschaumstoffe sind bekannt. Ihre Herstellung erfolgt üblicherweise durch Umsetzung eines Überschuss an Polyisocyanaten mit Verbindungen mit gegenüber Isocyanatgruppen reaktiven Wasserstoffatomen, insbesondere Polyolen. Durch den Isocyanat-Überschuss, in der Regel mit einem Isocyanatindex von mindestens 150 und größer, werden neben Urethanstrukturen, die durch die Umsetzung von Isocyanaten mit Verbindungen mit reaktiven Wasserstoffatomen entstehen, durch Reaktion der Isocyanatgruppen untereinander oder mit anderen Gruppen, wie zum Beispiel Polyurethangruppen, weitere Strukturen gebildet.

PUR/PIR-Hartschaumstoffe weisen wünschenswerte Eigenschaften in Hinblick auf die Wärmeisolation und Brandverhalten auf. Aufgrund dieser Eigenschaften werden sie für isolierende Verbundelemente, z.B. Metallsandwichelemente, eingesetzt, z.B. zur Verwendung im Industriehallenbau. Insbesondere werden Verbundelemente zum Bau von Kühlhäusern verwendet.

Damit die gewünschten Schaumeigenschaften, z.B. Rohdichten und Wärmeisolationseigenschaften der PUR/PIR-Hartschäume erzielt werden können, werden dem Reaktionsgemisch physikalische Treibmittel zugesetzt. Kohlenwasserstoffe weisen einerseits Vorteile wie einen günstigen Einfluss auf den Lambda-Wert auf, andererseits bedingen sie auch Nachteile, insbesondere die leichte Entflammbarkeit.

Ein Ziel bei der Herstellung von Kohlenwasserstoff-getriebenen PUR/PIR-Hartschaumstoffen ist es daher, die Menge von eingesetzten brennbaren Kohlenwasserstoffen möglichst gering zu halten, ohne weitere mit dem Treibmittel verbundene Eigenschaften wie z.B. den Schaumdruck, die Maßhaltigkeit, die Dichte und den Schrumpf negativ zu beeinflussen.

Verbundelemente, welche zum Bau von Kühlhäusern eingesetzt werden, sind oft dauerhaft tiefen Temperaturen im Bereich von 0 °C bis -30 °C ausgesetzt. Allerdings hat sich gezeigt, dass Verbundelemente bei dauerhafter Verwendung unter diesen Bedingungen in Bezug auf ihre Dicke schrumpfen. Diese Schrumpfung führt dann unter anderem zu unerwünschten Spannungen in den mit den Verbundelementen errichteten Gebäuden und zu Versatz zwischen einzelnen Verbundelementen und damit verbundenen optischen Mängeln.

Dem PUR/PIR-Reaktionsgemisch werden in der Regel Katalysatorkomponenten zugesetzt, welche geeignet sind, die Treibreaktion, die Urethanreaktion und / oder die Isocyanuratreaktion (Trimerisierung) zu katalysieren. Häufig werden für beide Reaktionen Amin-basierte Katalysatorsysteme eingesetzt, auch der Einsatz von Kaliumsalzen, insbesondere Kaliumacetat, als Trimerisierungskatalysator ist bekannt.

Die WO 07/25888 A beschreibt die Verwendung eines Katalysatorsystems bestehend aus bestimmten Aminoethylethern oder Aminoethylalkoholen sowie Salzen aromatischer oder aliphatischer Carbonsäuren, darunter Kaliumformiat, in PUR/PIR-Systemen. Bei Einsatz solcher Katalysatorsysteme wird für Ameisensäure/Wasser - getriebene PUR/PIR-Schäume ein positiver Effekt auf die Oberfläche gefunden. In der WO 07/25888 wird beschrieben, und auch in den Versuchen gezeigt, dass Ameisensäure als Treibmittel zu PUR/PIR Schäumen mit langen Aushärtezeiten führt. Die von WO 07/25888 vorgeschlagene Lösung ist der Einsatz des oben genannten Katalysatorsystems. Bei Verwendung dieses Katalysatorsystems werden mit Ameisensäure bessere Aushärtezeiten gefunden (ebd, Tabelle 2) als bei Verzicht auf den Aminoethylether (und Ersatz durch ein aliphatisch substituiertes, tertiäres Amin). Wird hingegen auf die Verwendung von Ameisensäure/Wasser verzichtet und diese durch ein Wasser/Dipropylenglykol - Gemisch ersetzt, wird ein deutlich schlechterer Schaum (spröde, erhöhte Anzahl an Oberflächendefekten) erhalten. Insgesamt offenbart die WO 07/25888 nur für die Verwendung von Ameisensäure in Kombination mit dem Katalysatorsystem Kaliumformiat / Aminoethylether gute Ergebnisse.

Allerdings ist auch bekannt, dass es bei der Verwendung von Ameisensäure oder Ameisensäure/Wasser-Gemischen als Treibmittel zu Korrosionsproblemen an der Anlage kommen kann und die Gefahr einer Kohlenmonoxid-Bildung besteht (siehe z.B. "Reactive Polymers Fundamentals and Applications", 2nd Edition, 2013, Johannes Karl Fink, ISBN: 978-1-4557-3149-7). Der Einsatz von Ameisensäure bewirkt vermehrte Harnstoff (Urea) - Bildung, wodurch wiederum die Sprödigkeit erhöht wird und die Haftung zu den Deckschichten im Vergleich zu rein physikalisch-getriebenen Schäumen negativ beeinflusst wird.

Ausgehend vom beschriebenen Stand der Technik ist es Ziel dieser Anmeldung, ein Verfahren für die Herstellung von PUR/PIR-Hartschäumen enthaltend physikalische Treibmittel zur Verfügung zu stellen, welches die bekannten PUR/PIR-Systeme im Hinblick auf Schaumdruck und Aushärtung verbessert, ohne dass höhere Mengen des physikalischen Treibmittels eingesetzt werden müssen, gleichzeitig aber auch auf den Einsatz von Ameisensäure und/oder Wasser als Treibmittel weitestgehend oder sogar ganz verzichtet.

Die genannte Aufgabe konnte nun überraschend gelöst werden durch ein Verfahren zur Herstellung eines PUR/PIR - Hartschaumstoffes umfassend den Schritt i) die Umsetzung eines Reaktionsgemisches enthaltend
A) eine Polyisocyanatkomponente
B) eine isocyanat-reaktive Komponente umfassend
   B1) eine Polyolkomponente,
   B2) eine Katalysatorkomponente,
   B3) gegebenenfalls Hilfs- und Zusatzstoffe,
C) ein physikalisches Treibmittel,
dadurch gekennzeichnet,
dass die Katalysatorkomponente B2) Kaliumformiat B2.a) enthält, und
dass das Reaktionsgemisch weniger als 0,3 Gew.-% (bevorzugt 0,2 Gew.-%, insbesondere bevorzugt weniger als 0,15 Gew.-%) Wasser und weniger als 0,2 Gew.-% (bevorzugt weniger als 0,1 Gew.-% Ameisensäure, insbesondere bevorzugt keine Ameisensäure) enthält
und einen Isocyanat-Index ≥ 150 aufweist.

Die isocyanat-reaktive Komponente enthält eine Polyolkomponente B1) umfassend mindestens ein Polyol ausgewählt aus der Gruppe bestehend aus Polyesterpolyolen, Polyetherpolyolen, Polyesterpolyolen, Polycarbonatpolyolen, Polyether-Polycarbonatpolyolen und Polyetheresterpolyolen.

In einer bevorzugten Ausführungsform umfasst die isocyanat-reaktive Komponente B)
B1.a) mindestens ein Polyol ausgewählt aus der Gruppe bestehend aus Polyesterpolyolen und Polyetheresterpolyolen
B1.b) gegebenenfalls weitere Polyole ausgewählt aus der Gruppe bestehend aus Polyetherpolyolen, Polycarbonatpolyolen und Polyether-Polycarbonatpolyolen und
B1.c) gegebenfalls weitere isocyanat-reaktive Komponenten.

Bei der Polyolkomponente B1.a) handelt es sich um ein oder mehrere Polyole ausgewählt aus der Gruppe bestehend aus Polyesterpolyolen und Polyetheresterpolyolen.

Der Anteil an Polyolkomponente B1.a) beträgt bevorzugt, bezogen auf das Gesamtgewicht der Komponente B1), mindestens 40 Gew.-% und bevorzugt mindestens 50 Gew.-% und besonders bevorzugt mindestens 55 Gew.-%. In einer bevorzugten Ausführungsform beträgt der Anteil an Polyesterpolyol B1.a) in der Komponente B1) 50 - 90 Gew.-%.

Geeignete Polyesterpolyole sind unter anderem Polykondensate aus Di- sowie weiterhin Tri- und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykole, weiterhin 1,2-Propandiol, 1,3-Propandiol, 1,3- und 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden. Es können zusätzlich auch einwertige Alkanole mit verwendet werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. In bestimmten Ausführungsformen ist der Einsatz von Polyestern enthaltend aliphatische Dicarbonsäuren (z.B. Glutarsäure, Adipinsäure, Bernsteinsäure) bevorzugt, insbesondere der Einsatz von rein aliphatischen Polyestern (ohne aromatische Gruppen). Als Säurequelle können auch die entsprechenden Anhydride verwendet werden. Es können zusätzlich auch Monocarbonsäuren wie Benzoesäure und Alkancarbonsäuren mitverwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierten Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Die Polyesterpolyole weisen bevorzugt eine Säurezahl 0 - 5 mg KOH/g auf. Dies stellt sicher, dass eine Blockade aminischer Katalysatoren durch Überführung in Ammoniumsalze nur begrenzt erfolgt und die Reaktionskinetik der Schäumreaktion wenig beeinträchtigt wird.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit ≥ 1 bis ≤ 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole mit zahlenmittleren Molekulargewichten Mn von vorzugsweise ≥ 18 g/mol bis ≤ 400 g/mol, bevorzugt von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit > 2 zerewitinoff-aktiven Wasserstoffen, besonders mit zahlenmittleren Funktionalitäten von > 2 bis ≤ 8, insbesondere von ≥ 3 bis ≤ 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molmassen Mn von vorzugsweise ≥ 62 g/mol bis ≤ 400 g/mol, insbesondere von ≥ 92 g/mol bis ≤ 200 g/mol.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Herstellungsverfahren der Polyole sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden. Es ist auch möglich, Polyester- und Polyetherpolyole über Glykolyse von geeigneten Polymer-Rezyklaten zu gewinnen. Geeignete Polyether-Polycarbonatpolyole und ihre Herstellung werden beispielsweise in der EP 2910585 A, [0024] - [0041], beschrieben. Beispiele zu Polycarbonatpolyolen und ihre Herstellung finden sich unter anderem in der EP 1359177 A. Die Herstellung geeigneter Polyetheresterpolyole ist unter anderem in der WO 2010/043624 A und in der EP 1 923 417 A beschrieben.

Bevorzugt sind in B1.a) Polyesterpolyole und/oder Polyetheresterpolyole enthalten, welche Funktionalitäten von ≥1,2 bis ≤ 3,5, insbesondere ≥1,6 bis ≤ 2,4 und eine Hydroxylzahl zwischen 100 bis 300 mg KOH/g, besonders bevorzugt 150 bis 270 mg KOH/g und insbesondere bevorzugt von 160 - 260 mg KOH/g, aufweisen. Vorzugsweise besitzen die Polyesterpolyole und Polyetheresterpolyole mehr als 70 mol%, bevorzugt mehr als 80 mol%, insbesondere mehr als 90 mol%, primäre OH-Gruppen.

Die zahlengemittelte Molmasse Mₙ (auch: Molekulargewicht) wird im Rahmen dieser Erfindung bestimmt durch Gelpermeationschromatographie nach DIN 55672-1 vom August 2007.

Die "Hydroxylzahl" gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-2 (1998).

Die "Säurezahl" wird im Rahmen der vorliegenden Erfindung bestimmt nach der Norm DIN EN ISO 2114:2002-06.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Im Sinne dieser Anmeldung kann es sich bei "einem Polyesterpolyol" auch um eine Mischung unterschiedlicher Polyesterpolyole handeln, wobei in diesem Fall die Mischung der Polyesterpolyole als gesamtes die genannte OH-Zahl aufweist. Analog gilt dies für die weiteren hier aufgeführten Polyole und ihre Kennzahlen.

Neben den oben beschriebenen Polyolen der Polyolkomponente B1.a) können in der Isocyanat-reaktiven Komponente B) auch weitere Isocyanat-reaktive Komponenten zum Einsatz kommen.

Hierfür werden insbesondere weitere Polyole B1.b) ausgewählt aus der Gruppe enthaltend Polyetherpolyole, Polycarbonatpolyole und Polyethercarbonatpolyole eingesetzt. Ganz besonders bevorzugt wird neben den einen oder mehreren Polyolen B1.a) auch ein oder mehrere Polyetherpolyole eingesetzt.

Der Zusatz von langkettigen Polyolen, insbesondere Polyetherpolyolen, kann die Verbesserung der Fließfähigkeit des Reaktionsgemisches und die Emulgierfähigkeit der treibmittelhaltigen Formulierung bewirken. Für die Herstellung von Verbundelementen können diese die kontinuierliche Produktion von Elementen mit flexiblen oder starren Deckschichten ermöglichen.

Diese langkettigen Polyole weisen Funktionalitäten von ≥ 1,2 bis ≤ 3,5 auf und besitzen eine Hydroxylzahl zwischen 10 und 100 mg KOH/g, bevorzugt zwischen 20 und 50 mg KOH/g. Sie besitzen mehr als 70 mol%, bevorzugt mehr als 80 mol%, insbesondere mehr als 90 mol% primäre OH-Gruppen. Die langkettigen Polyole sind bevorzugt Polyetherpolyole mit Funktionalitäten von ≥1,2 bis ≤ 3,5 und einer Hydroxylzahl zwischen 10 und 100 mg KOH/g.

Der Zusatz von mittelkettigen Polyolen, insbesondere Polyetherpolyolen, und niedermolekularen isocyanat-reaktiven Verbindungen, kann die Verbesserung der Haftung und Dimensionsstabilität des resultierenden Schaumes bewirken. Für die Herstellung von Verbundelementen mit dem erfindungsgemäßen Verfahren können diese mittelkettigen Polyole die kontinuierliche Produktion von Elementen mit flexiblen oder starren Deckschichten ermöglichen. Die mittelkettigen Polyole, bei denen es sich insbesondere um Polyetherpolyole handelt, weisen Funktionalitäten von ≥ 2 bis ≤ 6 auf und besitzen eine Hydroxylzahl zwischen 300 und 700 mg KOH/g.

Bei den verwendeten Polyetherpolyolen handelt es sich um die dem Fachmann bekannten, in der Polyurethansynthese einsetzbaren Polyetherpolyole mit den genannten Merkmalen.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxid und/oder Epichlorhydrin an di- oder polyfunktionelle Startermoleküle. Insbesondere bevorzugt ist die Addition von Ethylenoxid und Propylenoxid. Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, Bisphenole, insbesondere 4,4'-Methylenbisphenol, 4,4'-(1-Methylethyliden)bisphenol, 1,4-Butandiol, 1,6-Hexandiol sowie niedermolekulare, Hydroxylgruppen aufweisende Ester derartiger Polyole mit Dicarbonsäuren sowie Oligoether derartiger Polyole.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit CO₂ erhältlich sind.

Weiterhin können in der Polyolkomponente B1) neben den beschriebenen Polyolen weitere isocyanat-reaktive Verbindungen B1.c) enthalten sein, insbesondere Polyamine, Polyole, Polyaminoalkohole und Polythiole. Selbstverständlich umfassen die beschriebenen Isocyanat-reaktiven Komponenten auch solche Verbindungen mit gemischten Funktionalitäten.

In bevorzugten Ausführungsformen der Komponente B1) sind in dieser auch niedermolekulare isocyanat-reaktive Verbindungen enthalten, insbesondere di- oder trifunktionelle Amine und Alkohole, besonders bevorzugt Diole und/oder Triole mit Molmassen Mₙ kleiner als 400 g/mol, vorzugsweise von 60 bis 300 g/mol. Zum Einsatz kommen z.B. Triethanolamin, Diethylenglykol, Ethylenglykol, Glycerin sowie niedermolekulare Ester oder Halbester dieser Alkohole, z.B. der Halbester von Phthalsäureanhydrid und Diethylenglykol. Falls zur Herstellung der PUR/PIR-Hartschaumstoffe solche niedermolekularen isocyanat-reaktiven Verbindungen Anwendung finden, z.B. in der Funktion als Kettenverlängerungsmittel und/oder Vernetzungsmittel, kommen diese zweckmäßigerweise in einer Menge von maximal 5 Gew.-%, bezogen auf das Gesamtgewicht der Komponente B1), zum Einsatz. Verbindungen, die aufgrund ihrer Struktur sowohl unter die Definition der Komponente B1.c) als auch unter eine der Definitionen der oben beschriebenen Polyolverbindungen B1.a) oder B1.b) fallen, werden mengenmäßig zu der Komponente B1.a) oder B1.b) und nicht zu der Komponente B1.c) gerechnet.

Eine bevorzugte Polyolkomponente B1) für die mit diesem Verfahren hergestellten Schäume enthält 50 bis 100 Gew.-%, bevorzugt 55 - 98 Gew.-%, der Polyolkomponente B1.a), welche ausgewählt ist aus einer oder mehreren Polyolen der Gruppe bestehend aus Polyesterpolyolen und Polyetheresterpolyolen in einem Hydroxylzahlbereich zwischen 100 bis 300 mg KOH/g und mit Funktionalitäten von ≥ 1,2 bis ≤ 3,5, insbesondere ≥1,6 bis ≤ 2,4,
weiterhin können
0 bis 25 Gew.-%, bevorzugt 1 bis 20 Gew.-%, langkettige Polyetherpolyole mit einer Funktionalität von ≥ 1,2 bis ≤ 3,5 und einer Hydroxylzahl zwischen 10 und 100 mg KOH/g (B1.b), sowie
0 bis 10 Gew.-%, insbesondere 1 bis 5 Gew.-%, niedermolekulare Isocyanat-reaktive Verbindungen mit einer Molmasse Mₙ kleiner als 400 g/mol (B1.c), und
0 bis 10 Gew.-%, insbesondere 0 bis 6 Gew.-%, mittelkettige Polyetherpolyole mit Funktionalitäten von ≥ 2 bis ≤ 6 und einer Hydroxylzahl zwischen 300 und 700 mg KOH/g (B1.b) enthalten sein.

In einer weiterhin bevorzugten Ausführungsform enthält die Polyolkomponente B1) mindestens ein Polyesterpolyol mit einer Funktionalität von ≥1,2 bis ≤ 3,5, insbesondere ≥1,8 bis ≤ 2,5 und einer Hydroxylzahl von 100 bis 300 mg KOH/g, sowie einer Säurezahl von 0,0 bis 5,0 mg KOH/g in einer Menge von 65,0 - 99,0 Gew.-% bezogen auf das Gesamtgewicht der Komponente B1); und ein Polyetherpolyol mit einer Funktionalität von ≥ 1,8 bis ≤ 3,5 und einer Hydroxylzahl von 10 bis 100 mg KOH/g, bevorzugt 20 bis 50 mg KOH/g, in einer Menge von 1,0 bis 20,0 Gew.-%, bezogen auf das Gesamtgewicht der Komponente B1).

Die isocyanat-reaktive Komponente B) bzw. das Reaktionsgemisch kann Hilfs- und Zusatzstoffe B3) enthalten. Diese werden entweder mit den anderen Komponenten vorgelegt oder während der Herstellung der PUR/PIR-Hartschäume der Mischung der Komponenten zu dosiert.

Bevorzugt umfassen die Hilfs- und Zusatzstoffe B3) Emulgatoren (B3.a). Als geeignete Emulgatoren, die auch als Schaumstabilisatoren dienen, können beispielsweise alle handelsüblichen durch Polyetherseitenketten modifizierten Silikonoligomere eingesetzt werden, die auch zur Herstellung von herkömmlichen Polyurethanschäumen eingesetzt werden. Falls Emulgatoren eingesetzt werden, handelt es sich um Mengen von bevorzugt bis zu 8 Gew.-%, besonders bevorzugt von 0,5 bis 7,0 Gew.-%, jeweils bezogen auf das Gesamtgewicht der Isocyanat-reaktiven Zusammensetzung. Bevorzugte Emulgatoren sind Polyetherpolysiloxancopolymerisate. Solche sind beispielsweise unter der Bezeichnung Tegostab® B84504 und B8443 der Firma Evonik, Niax* L-5111 der Firma Momentive Performance Materials, AK8830 der Firma Maystar sowie Struksilon 8031 der Fa. Schill und Seilacher am Markt erhältlich. Auch silikonfreie Stabilisatoren, wie bspw. das Produkt LK 443 von Air Products, können eingesetzt werden.

Zur Verbesserung der Brandbeständigkeit werden den Isocyanat-reaktiven Zusammensetzungen zudem Flammschutzmittel (B3.b) zugesetzt. Derartige Flammschutzmittel sind dem Fachmann im Prinzip bekannt und beispielsweise in "Kunststoffhandbuch", Band 7 "Polyurethane", Kapitel 6.1 beschrieben. Dies können beispielsweise halogenierte Polyester und Polyole, brom- und chlorhaltige Paraffine oder Phosphorverbindungen, wie zum Beispiel die Ester der Orthophosphorsäure und der Metaphosphorsäure, die ebenfalls Halogen enthalten können, sein. Bevorzugt werden bei Raumtemperatur flüssige Flammschutzmittel gewählt. Beispiele sind Triethylphosphat, Diethylethanphosphonat, Kresyldiphenylphosphat, Dimethylpropanphosphonat und Tris(β-chlorisopropyl)phosphat. Besonders bevorzugt sind Flammschutzmittel ausgewählt aus der Gruppe bestehend aus Tris(chloro-2-propyl)-phosphat (TCPP) und Triethylphosphat (TEP) und Mischungen daraus. Bevorzugt werden Flammschutzmittel in einer Menge von 1 bis 30 Gew.-%, besonders bevorzugt 5 bis 30 Gew.- %, bezogen auf das Gesamtgewicht der Isocyanat-reaktiven Zusammensetzung B) eingesetzt. Um bestimmte Eigenschaftsprofile (Viskosität, Sprödigkeit, Brennbarkeit, Halogengehalt etc.) zu erzielen, kann es auch günstig sein, unterschiedliche Flammschutzmittel miteinander zu kombinieren. In bestimmten Ausführungsformen ist die Anwesenheit von Triethylphosphat (TEP) im Flammschutzmittelgemisch oder als alleiniges Flammschutzmittel besonders vorteilhaft.

Weiterhin umfasst die Komponente B3) auch alle anderen Additive (B3.c), die Isocyanat-reaktiven Zusammensetzungen zugesetzt werden können. Beispiele für solche Additive sind Zellregulantien, Thixotropiermittel, Weichmacher und Farbstoffe.

Die Katalysatorkomponente B2) enthält erfindungsgemäß Kaliumformiat B2.a). Dieses wird oft als Lösung, z.B. in Diethylenglykol / Monoethylenglykol, eingesetzt. Bevorzugt wird Kaliumformiat in einer Konzentration von 0,2 - 4,0 Gew.-%, bevorzugt 0,4 - 2,0 Gew.-% (bezogen auf die Masse reines Kaliumformiat in der Komponente B) eingesetzt.

Daneben können weitere Katalysatoren in B2) vorhanden sein, um z.B. die Treibreaktion, die Urethanreaktion und / oder die Isocyanuratreaktion (Trimerisierung) katalysieren. Die Katalysatorkomponenten können dem Reaktionsgemisch zudosiert oder auch ganz oder teilweise in der Isocyanat-reaktiven Komponente B) vorgelegt werden.

Neben Kaliumformiat besonders geeignet sind insbesondere eine oder mehrere katalytisch aktive Verbindungen ausgewählt aus den folgenden Gruppen:
B2.b) Aminische Katalysatoren, z.B. Amidine, wie 2,3-Dimethyl-3,4,5,6-tetrahydropyrimidin, und/oder tertiäre Amine, wie z.B. Triethylamin, Tributylamin, Dimethylcyclohexylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Bis(2-dimethylaminoethyl)ether, Bis-(dimethylaminopropyl)-harnstoff, Dimethylpiperazin, 1,2-Dimethyl-imidazol, N,N',N"-Tris-(dimethylaminopropyl)hexahydrotriazin, Bis[2-(N,N-dimethylamino)ethyl]ether, 1-Aza-bicyclo-(3,3,0)-octan und 1,4-Diaza-bi-cyclo-(2,2,2)-octan, und Alkanolaminverbindungen, wie Triethanolamin, Triisopropanolamin, N-Methyl- und N-Ethyl-diethanolamin, N,N-Dimethylaminoethoxyethanol, N,N,N'-Trimethylaminoethyl-ethanolamin und Dimethylethanolamin. Besonders geeignete Verbindungen sind ausgewählt aus der Gruppe umfassend tertiäre Amine, wie Triethylamin, Tributylamin, Dimethylcyclohexylamin, Dimethylbenzylamin, N,N,N',N'- Tetramethylethylendiamin, Pentamethyldiethylentriamin, Bis(2-dimethylaminoethyl)ether, Dimethylpiperazin, 1,2-Dimethyl-imidazol und Alkanolaminverbindungen, wie Tris(dimethylaminomethyl)phenol, Triethanolamin, Triisopropanolamin, N-Methyl- und N-Ethyl-diethanolamin, N,N-Dimethylaminoethoxyethanol, N,N,N'-Trimethylaminoethyl-ethanolamin und Dimethylethanolamin,
In einer ebenfalls bevorzugten Ausführungsform werden in der Katalysatorkomponente ein oder mehrere aminische Verbindungen gemäß folgender Struktur eingesetzt:

(CH₃)₂N-CH₂-CH₂-X-CH₂-CH₂-Y

wobei Y = NR₂ oder OH, vorzugsweise Y = N(CH₃)₂ oder OH, besonders bevorzugt Y = N(CH₃)₂ und wobei X= NR oder O, vorzugsweise X= N-CH₃ oder O, besonders bevorzugt X= N-CH₃. Dabei ist jedes R unabhängig von jedem anderen R wählbar und stellt einen beliebig aufgebauten organischen Rest mit mindestens einem C-Atom dar. Vorzugsweise ist R eine Alkylgruppe mit 1 bis 12 C-Atomen, insbesondere C1- bis C6-Alkyl, besonders bevorzugt Methyl und Ethyl, insbesondere Methyl.

Bevorzugt enthält die Komponente B2.b) Dimethylbenzylamin, (DMBA, N,N-dimethyl-1-phenylmethanamin nach IUPAC) und/oder Dimethylcyclohexylamin, (DMCHA, N,N-Dimethylcyclohexanamin nach IUPAC), insbesondere Dimethylcyclohexylamin. Insbesondere enthält die Komponente B2.b) neben Dimethylbenzylamin und/oder Dimethylcyclohexylamin keine weiteren aminischen Katalysatoren.

Neben den oben genannten Katalysatorkomponenten besonders geeignet sind insbesondere noch eine oder mehrere katalytisch aktive Verbindungen ausgewählt aus
B2.c) Metallcarboxylaten, welche unterschiedlich von Kaliumformiat sind, insbesondere Alkalioder Erdalkalimetalle, insbesondere Natriumacetat, Natriumoctoat, Kaliumacetat, Kaliumoctoat, sowie Zinncarboxylate, z.B. Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat und Dioctylzinndiacetat und Ammoniumcarboxylate. Insbesondere bevorzugt sind Natrium-, Kalium- und Ammoniumcarboxylate. Bevorzugte Carboxylate sind Ethylhexanoate (=Octoate), Proprionate und Acetate.

Die Katalysatorkomponenten können dem Reaktionsgemisch zudosiert oder auch ganz oder teilweise in der Isocyanat-reaktiven Komponente B) vorgelegt werden.

Die Reaktivität des Reaktionsgemisches wird i.d.R. mittels der Katalysatorkomponente auf die Bedürfnisse angepasst. So verlangt die Herstellung von dünnen Platten ein Reaktionsgemisch mit einer höheren Reaktivität als die Herstellung von dickeren Platten. Typische Parameter sind die Startzeit und die Abbindezeit als Maß für die Zeit, zu der das Reaktionsgemisch zu reagieren beginnt, und für den Zeitpunkt, an dem ein hinreichend stabiles Polymernetzwerk gebildet ist. Die zur Herstellung des Hartschaumstoffes nötigen Katalysatoren B2.a), B2.b) und gegebenenfalls B2.c) werden in einer bevorzugten Ausführungsform in solcher Menge eingesetzt, dass z.B. auf kontinuierlich produzierenden Anlagen Elemente mit flexiblen und starren Deckschichten mit Geschwindigkeiten bis zu 80 m/min je nach Elementstärke produziert werden können.

Bevorzugt wird insbesondere eine Kombination aus den Katalysatorkomponenten Kaliumformiat B2.a) und aminischen Katalysatoren B2.b) im molaren Verhältnis n(Kaliumformiat)/n(Amin) zwischen 0,1 und 80, insbesondere zwischen 0,5 und 20 in dem Reaktionsgemisch verwendet. Kurze Abbindezeiten können zum Beispiel mit mehr als 0,2 Gew.-% Kaliumformiat bezogen auf alle Komponenten des Reaktionsgemisches erzielt werden.

Der Anteil an reinem Kaliumformiat in der Katalysatormischung beträgt bevorzugt 15 - 100 Gew.-%, besonders bevorzugt 30 - 100 Gew.-%. Bevorzugt werden neben Kaliumformiat keine weiteren Katalysatoren eingesetzt, die insbesondere die Trimerisierungsreaktion katalysieren. Besonders bevorzugt enthält die Katalysatormischung neben Kaliumformiat keine weiteren Metallcarboxylate.

Das Reaktionsgemisch enthält weiterhin so viel Treibmittel C) wie zur Erzielung einer dimensionsstabilen Schaummatrix und der gewünschten Rohdichte nötig ist. In der Regel sind dies 0,5 - 30,0 Gewichtsteile Treibmittel bezogen auf 100,0 Gewichtsteile der Komponente B. Als Treibmittel werden vorzugsweise physikalische Treibmittel ausgewählt aus wenigstens einem Mitglied der Gruppe bestehend aus Kohlenwasserstoffen, halogenierten Ethern und perfluorierten und teilfluorierten Kohlenwasserstoffen mit 1 bis 8 Kohlenstoffatomen eingesetzt. Unter "physikalischen Treibmitteln" werden im Rahmen der vorliegenden Erfindung solche Verbindungen verstanden, die aufgrund ihrer physikalischen Eigenschaften leicht flüchtig sind und nicht mit der Polyisocyanatkomponente reagieren. Bevorzugt sind die erfindungsgemäß einzusetzenden physikalischen Treibmittel ausgewählt aus Kohlenwasserstoffen (z. B. n-Pentan, iso-Pentan, cyclo-Pentan, Butan, Isobutan, Propan), Ethern (z. B. Methylal), halogenierten Ethern, (per)fluorierte Kohlenwasserstoffe mit 1 bis 8 Kohlenstoffatomen (z. B. Perfluorhexan), sowie deren Gemischen untereinander. Auch bevorzugt ist der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en), sowie der Einsatz von Kombinationen dieser Treibmittel. In besonders bevorzugten Ausführungsformen wird als Treibmittel C) ein Pentanisomer oder ein Gemisch verschiedener Pentanisomeren eingesetzt. Außerordentlich besonders bevorzugt wird eine Mischung aus Cyclopentan und Isopentan als Treibmittel C) eingesetzt. Weitere Beispiele für bevorzugt eingesetzte Fluorkohlenwasserstoffe sind z.B. HFC 245fa (1,1,1,3,3-Pentafluorpropan), HFC 365mfc (1,1,1,3,3-Pentafluorbutan), HFC 134a oder deren Mischungen verwendet. Es können auch verschiedene Treibmittelklassen kombiniert werden.

Insbesondere bevorzugt ist auch der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4oder2)-(trifluormethyl)pent-2-en und/oder 1,1,1,3,4,4,5,5,5- Nonafluor-4(oder2)-(trifluormethyl)pent-2-en), allein oder in Kombination mit anderen Treibmitteln. Diese haben den Vorteil, ein besonders niedriges Ozonabbaupotential (ODP) aufzuweisen und ein besonders niedriges Treibhauspotential (GWP) zu besitzen.

Auch chemische Treibmittel können enthalten sein, jeweils unter der Maßgabe, dass das Reaktionsgemisch
- weniger als 0,20 Gew.-%, bevorzugt weniger als 0,10 Gew.-%, insbesondere bevorzugt keine (0,00 Gew.-%) Ameisensäure und
- weniger als 0,30 Gew.-%, bevorzugt 0,20 Gew.-%, insbesondere bevorzugt weniger als 0,15 Gew.-%, Wasser
enthält.

Dies bedeutet insbesondere, dass die Komponente B) bevorzugt neben der in technischen Produkten unvermeidbaren Restfeuchte kein weiteres Wasser enthält (z.B. durch bewusste Zugabe effektiver Mengen an Wasser). Überraschenderweise konnte nur bei diesen Schäumen mit sehr niedrigem Wassergehalt eine Verkürzung der Klebfreizeit festgestellt werden.

In einer bevorzugten Ausführungsform enthält das Reaktionsgemisch zusätzlich zu den oben genannten Treibmitteln ein Carbamat, welches unter Reaktionsbedingungen Kohlendioxid abspalten kann. Bevorzugt ist z.B. der Einsatz von 2-Hydroxypropylcarbamat. Überraschend wird gefunden, dass der positive Effekt sowohl auf den Schaumdruck als auch auf die Aushärtung in Gegenwart von Carbamat besonders ausgeprägt ist.

Die Komponente A) ist ein Polyisocyanat, also ein Isocyanat mit einer NCO-Funktionalität von ≥ 2. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe, 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen.

Als Polyisocyanatkomponente A) werden bevorzugt Mischungen der Isomeren des Diphenylmethandiisocyanats ("monomeres MDI", abgekürzt "mMDI") und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenyl-polymethylen-polyisocyanate, d.h. Gemische der höherkernigen Homologen des Diphenyl-methylen-diisocyanates, welche eine NCO - Funktionalität f > 2 aufweisen und sich durch folgende Summenformel beschreiben lassen: C₁₅H₁₀N₂O₂[C₈H₅NO]ₙ, wobei n = ganze Zahl > 0, bevorzugt n = 1, 2, 3 und 4, ist. Höherkernige Homologe C₁₅H₁₀N₂O₂[C₈H₅NO]ₘ, m = ganze Zahl ≥ 4) können ebenfalls im Gemisch aus organischen Polyisocyanaten A) enthalten sein. Als Polyisocyanat-Komponente A) weiterhin bevorzugt sind Mischungen aus mMDI und/oder pMDI mit maximal bis zu 20 Gew.-%, mehr bevorzugt maximal 10 Gew.-% an weiteren, für die Herstellung von Polyurethanen bekannten aliphatischen, cycloaliphatischen und insbesondere aromatischen Polyisocyanaten, ganz besonders TDI.

Die Polyisocyanat-Komponente A) zeichnet sich weiterhin dadurch aus, dass sie vorzugsweise eine Funktionalität von mindestens 2, insbesondere mindestens 2,2, besonders bevorzugt mindestens 2,4, und ganz besonders bevorzugt mindestens 2,7 aufweist.

Für den Einsatz als Polyisocyanat-Komponente sind polymere MDI-Typen im Hartschaum gegenüber monomeren Isocyanaten besonders bevorzugt.

Der NCO-Gehalt der Polyisocyanatkomponente A) beträgt bevorzugt von ≥ 29,0 Gew.-% bis ≤ 33,0 Gew.%, und weist bevorzugt eine Viskosität bei 25 °C von ≥ 80 mPas bis ≤ 2900 mPas, besonders bevorzugt von ≥ 95 mPas bis ≤ 850 mPas bei 25°C auf.

Der NCO-Wert (auch: NCO-Gehalt, Isocyanatgehalt) wird bestimmt mittels EN ISO 11909:2007. Falls nicht anders angegeben, handelt es sich um die Werte bei 25°C.

Bei Angaben zur Viskosität handelt es sich um die dynamische Viskosität, bestimmt mittels DIN EN ISO 3219:1994-10 "Kunststoffe - Polymere/Harze in flüssigem, emulgiertem oder dispergiertem Zustand".

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Statt oder zusätzlich zu den oben genannten Polyisocyanaten können auch geeignete NCO-Präpolymere als organische Polyisocyanat-Komponente A) eingesetzt werden. Die Präpolymere sind herstellbar durch Umsetzung eines oder mehrerer Polyisocyanate mit einem oder mehreren Polyolen, entsprechend den unter den Komponenten A) beschriebenen Polyolen. Es ist möglich, dass das Isocyanat ein Präpolymer ist, welches erhältlich ist durch Reaktion eines Isocyanats mit einer NCO-Funktionalität von ≥ 2 und Polyolen mit einem Molmasse Mn von ≥ 62 g/mol bis ≤ 8000 g/mol und OH-Funktionalitäten von ≥ 1,5 bis ≤ 6,0.

Aus Isocyanat-reaktiver Komponente B) und Polyisocyanatkomponente A) wird durch Mischung ein Reaktionsgemisch erzeugt, welche zu dem PUR/PIR-Hartschaum führt. Die Herstellung erfolgt im Allgemeinen über Vermischung aller Komponenten über übliche Hoch- oder Niederdruckmischköpfe.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden: Kennzahl = (Mole Isocyanat-Gruppen / Mole Isocyanat-reaktive Gruppen) * 100

Im Reaktionsgemisch werden die Anzahl der NCO-Gruppen im Isocyanat und die Anzahl der gegenüber Isocyanaten reaktiven Gruppen so eingestellt, dass sie zu einer Kennzahl (Index) von 150 bis 600 führen. Die Kennzahl liegt bevorzugt in einem Bereich von > 180 bis < 450.

In einer bevorzugten Ausführungsform betrifft die vorliegende Erfindung einen Polyurethan-/Polyisocyanurat (PUR/PIR)-Hartschaum erhältlich aus der Umsetzung eines Reaktionsgemisches aus
B) einer isocyanat-reaktiven Zusammensetzung umfassend
   B1.a) 50,0 bis 90,0 Gew.-% wenigstens eines Polyesterpolyols und/oder Polyetheresterpolyols mit einer Hydroxylzahl im Bereich von 80 mg KOH/g bis 290 mg KOH/g,
   B1.b) 1,0 bis 20,0 Gew.-% wenigstens eines Polyetherpolyols mit einer Hydroxylzahl im Bereich von 300 mg KOH/g bis 600 mg KOH/g, bevorzugt umfassend ein mit einem aromatischen Amin gestartetes Polyetherpolyol.
   B1.c) 0,0 bis 5,0 Gew.-%, insbesondere 1,0 - 5,0 Gew.-%, niedermolekulare Isocyanat-reaktive Verbindungen mit einer Molmasse Mn kleiner als 400 g/mol
   B3.b) 1,0 bis 30,0 Gew.-% wenigstens eines Flammschutzmittels,
   B2.a) 0,1 bis 4,0 Gew.-% Kaliumformiat
   wobei die Angaben in Gew.-% jeweils auf alle Komponenten der isocyanatreaktiven Zusammensetzung B) bezogen sind;
   mit
A) einem Gemisch von Diphenylmethan-4,4'-diisocyanat mit Isomeren und höherfunktionellen Homologen, wobei der Isocyanat-Index ≥ 150 bis ≤ 450 beträgt,
   in Gegenwart von
C) einem physikalischen Treibmittel,
wobei das Reaktionsgemisch weniger als 0,30 Gew.-% Wasser und weniger als 0,20 Gew.-% Ameisensäure enthält.

In einer Ausführungsform der erfindungsgemäßen PUR/PIR-Hartschäume weisen diese eine Kernrohdichte von ≥ 30 kg/m³ bis ≤ 50 kg/m³ auf. Die Dichte wird gemäß DIN EN ISO 3386-1-98 bestimmt. Vorzugsweise liegt die Dichte in einem Bereich von ≥ 33 kg/m³ bis ≤ 45 kg/m³ und besonders bevorzugt von ≥ 36 kg/m³ bis ≤ 42 kg/m³.

Ein weiterer Gegenstand der vorliegenden Erfindung ist die Verwendung der erfindungsgemäßen PUR/PIR-Schäume zur Herstellung von Verbundelementen, insbesondere Metallverbundelementen. Zu Details einzelner Ausführungsformen wird zur Vermeidung unnötiger Wiederholungen auf die Erläuterungen des erfindungsgemäßen Verfahrens verwiesen.

Metallverbundelemente sind Sandwich-Verbundelemente, bestehend aus wenigstens zwei Deckschichten und einer dazwischen liegenden Kernschicht. Im Besonderen bestehen Metall-Schaumstoff-Verbundelemente wenigstens aus zwei Deckschichten aus Metall und einer Kernschicht aus einem Schaumstoff, z.B. einem Polyurethan (PUR)-Hartschaumstoff, bzw. aus einem Polyurethan/Polyisocyanurat (PUR/PIR)-Hartschaumstoff. Derartige Metall-Schaumstoff-Verbundelemente sind aus dem Stand der Technik hinlänglich bekannt und werden auch als Metallverbundelemente bezeichnet. Als Deckschichten werden dabei neben beschichteten Stahlblechen auch Edelstahl-, Kupfer- oder Aluminiumbleche eingesetzt. Zwischen der Kernschicht und den Deckschichten können weitere Schichten vorgesehen sein. Beispielsweise können die Deckschichten, z.B. mit einem Lack, beschichtet werden.

Beispiele für die Anwendung derartiger Metallverbundelemente sind ebene oder linierte Wandelemente sowie profilierte Dachelemente für den Industriehallen- und Kühlhausbau ebenso wie für LKW-Aufbauten, Hallentüren oder Transportcontainer.

Die Herstellung dieser Metallverbundelemente kann kontinuierlich (bevorzugt) oder diskontinuierlich erfolgen. Vorrichtungen zur kontinuierlichen Herstellung sind z.B. aus DE 1 609 668 A oder DE 1 247 612 A bekannt. Eine kontinuierliche Anwendung erfolgt beim Einsatz von Doppelbandanlagen. Das Reaktionsgemisch wird beim Doppelbandverfahren nach dem Stand der Technik beispielsweise mittels oszillierenden Auftragsvorrichtungen, z.B. Gießharken, oder einer oder mehreren feststehenden Gießvorrichtungen, z.B. mittels Löcher oder andere Bohrungen aufweisenden Gießharken oder mittels Spalten und/oder Schlitze aufweisenden Düsen oder mittels Mehrfingertechnologie, auf die untere Deckschicht aufgetragen. Siehe hierzu beispielsweise die EP 2 216 156 A1, WO 2013/107742 A, WO 2013/107739 A und die WO 2017/021463 A.

Darüber hinaus betrifft die Erfindung auch ein Verfahren zur Herstellung eines Verbundelementes, wobei ein erfindungsgemäßes Reaktionsgemisch mittels einer Gießvorrichtung auf eine bewegte Deckschicht aufgebracht wird.

### Beispiele

Zur Herstellung der PUR/PIR - Hartschäume werden folgende Verbindungen eingesetzt:
- B1.a-P1: Polyesterpolyol hergestellt aus Phthalsäureanhydrid, Adipinsäure, Monoethylenglykol und Diethylenglykol, OH-Zahl 240 mg KOH/g der Fa. Covestro Deutschland AG,
- B1.a-P2: Stepanpol PS 2412, aromatisches Polyesterpolyol basierend auf Phthalsäureanhydrid und Diethylenglycol, enthaltend 3-10 wt-% TCPP, OH-Zahl 240 mg KOH/g der Fa. Stepan,
- B1.a-P3: Aliphatisches Polyesterpolyol hergestellt durch Umsetzung eines Gemisches aus Adipinsäure, Bernsteinsäure und Glutarsäure mit Ethylenglykol, OH-Zahl 216 mg KOH/g der Fa. Covestro Deutschland AG,
- B1.b-P4: Polyetherpolyol auf Basis von ortho-Toluoldiamin, Ethylenoxid und Propylenoxid mit einer OH-Zahl von 415 mg KOH/g von der Fa. Covestro Deutschland AG,
- B1.b-P5: Polyetherpolyol auf Basis von Propylenglykol, Propylenoxid und Ethylenoxid mit 90% primären OH-Gruppen und einer OH-Zahl von 28 mg KOH/g der Fa. Covestro Deutschland AG,
- B3.b-1: Tris(1-chloro-2-propyl)-phosphat (TCPP) der Fa. Lanxess GmbH
- B3.b-2: Triethylphosphat (TEP) der Fa. Lanxess GmbH
- B3.a-1: Polyetherpolysiloxancopolymerisat Tegostab® B8443 der Fa. Evonik.
- B1.c-P6: Halbester aus Phthalsäureanhydrid und Diethylenglykol, OH-Zahl 795 mg KOH/g der Fa. Covestro Deutschland AG,
- A-1: Desmodur® 44V70L polymeres PolyA-1 auf Basis 4,4-Diphenylmethandiisocyanat mit einem NCO-Gehalt von ca. 31,5 Gew.-% Fa. Covestro Deutschland AG
- Carbamat: 2-Hydroxypropylcarbamidsäuresalz, 40-60 %ig in Ethandiol, Kohlendioxid-freisetzendes Additiv der Fa. Covestro Deutschland AG
- B2.b-1: Dimethylbenzylamin, Covestro Deutschland AG
- B2.c-1: Kaliumacetat (nach IUPAC: Kaliumethanoat), 25 wt-% in Diethylenglykol (DEG)
- B2.c-2: 12,5 wt-% Kaliumacetat (nach IUPAC: Kaliumethanoat) und 25 wt-% Kalium-2-ethylhexanoat in Diethylenglykol (DEG)
- B2.c-3: Kalium-2-ethylhexanoat, 50 wt-% in DEG:NMP (=1:2)
- B2.a-1: Kaliumformiat (nach IUPAC: Kaliummethanoat), 36 wt-% in Monoethylenglykol
- C-1: n-Pentan [F+;Xn;N]

### Messung der Reaktions- und Produkteigenschaften der hergestellten PUR/PIR-Hartschäume:

Der Schaumdruck und die Fließeigenschaften während der Schaumreaktion können nach dem Fachmann bekannten Verfahren in einem Hartschaumrohr ermittelt werden. Hierzu wird das Reaktionsgemisch analog zu obiger Beschreibung in einem Pappbecher hergestellt und der gefüllte Pappbecher in ein temperiertes Rohr von unten eingeführt. Das Steigprofil sowie der sich ausbildende Schaumdruck werden während der Reaktion kontinuierlich erfasst.

Die Messung der Rohdichte wurde nach der DIN EN ISO 845 (Oktober 2009) durchgeführt.

### Messung der Abbindezeit:

Die Abbindezeit ist generell diejenige Zeit, nach der zum Beispiel bei der Polyaddition zwischen Polyol und Polyisocyanat ein theoretisch unendlich ausgedehntes Polymer entstanden ist (Übergang vom flüssigen in den festen Zustand). Die Abbindezeit lässt sich experimentell dadurch ermitteln, dass in das aufschäumende Reaktionsgemisch, hier hergestellt in einem Testpäckchen mit einer Grundfläche von 20x20 cm², in kurzen Abständen ein dünner Holzstab eingetaucht wird. Die Zeit vom Vermischen der Komponenten bis zu dem Zeitpunkt, bei dem am Stab beim Herausziehen Fäden hängenbleiben, ist die Abbindezeit.

### Messung der Klebfreizeit:

Nach erfolgtem Austrag wird die Klebfreizeit der Schaumoberfläche nach TM 1014:2013 (FEICA) ermittelt.

### Messung der Eindrucktiefe:

Die Eindrucktiefe an frisch hergestellten Laborschäumen in Testpäckchen mit einer Grundfläche von 20x20 cm² wird über die Messung der Eindringtiefe eines Stempels mit definiertem Stempeldruck nach den angegebenen Zeitspannen während der Aushärtephase bestimmt.

### Beispiele 1 - 4): Herstellung von Pentan-getriebenen Schäumen, mit Kaliumcarboxylat-Katalysatoren, ohne Amin - Katalysator

Alle Schäume werden mittels Handvermischung im Labormaßstab in Testpäckchen mit Grundfläche 20x20 cm² hergestellt (Formulierungen und Reaktionseigenschaften siehe Tabelle 1). Die Polyolkomponente enthaltend die Polyole, Additive und Katalysatoren werden vorgelegt. Kurz vor der Vermischung wird die Polyolkomponente auf 23-25°C temperiert, wohingegen die Polyisocyanatkomponente auf eine konstante Temperatur von 30-35°C gebracht wird. Anschließend wird unter Rühren die Polyisocyanatkomponente zur Polyolmischung gegeben, zu der die zur Erreichung einer Kernrohdichte von 37 - 38 kg/m³ benötigte Menge an Pentan zuvor zugewogen worden ist. Die Mischzeit beträgt 6 sec und die Mischgeschwindigkeit des Pendraulik-Rührers beträgt 4200 min-1. Nach 2,5 bzw. 5 Minuten wird die Schaumhärte mittels einer Eindruck-Methode und nach 8-10 Minuten die maximale Kerntemperatur bestimmt. Der Schaum wird anschließend für weitere 24 Stunden 20 bei 23°C gelagert, damit dieser nachreagieren kann.

**Tabelle 1: Herstellung und Eigenschaften von Pentan-getriebenen Schäumen, mit Kaliumcarboxylat-Katalysatoren, ohne Amin - Katalysator**

| **Formulierung, Reaktionseigenschaften** | **Einheit** | **Beispiel 1*** | **Beispiel 2*** | **Beispiel 3*** | **Beispiel 4** |
|---|---|---|---|---|---|
| B1.a-P1 | pbw | 66,5 | 66,5 | 66,5 | 66,5 |
| B1.b-P4 | pbw | 5,2 | 5,2 | 5,2 | 5,2 |
| B3.b-1 | pbw | 20,8 | 20,8 | 20,8 | 20,8 |
| B3.b-2 | pbw | 5,2 | 5,2 | 5,2 | 5,2 |
| B1.c-P6 | pbw | 2,3 | 2,3 | 2,3 | 2,3 |
| B3.a-1 | pbw | 3,0 | 3,0 | 3,0 | 3,0 |
| B2.c-1 | pbw | 4,300 | | | |
| B2.c-2 | pbw | | 4,300 | | |
| B2.c-3 | pbw | | | 3,800 | |
| B2.a-1 | pbw | | | | 2,900 |
| A-1 | pbw | 189,2 | 189,0 | 167,4 | 190,8 |
| C-1 | pbw | 14,6 | 14,6 | 13,5 | 13,7 |
| C-1 | wt-% | 4,7 | 4,7 | 4,7 | 4,4 |
| Index | | 330,0 | 330,0 | 330,0 | 330,0 |
| Startzeit | s | 16 | 15 | 12 | 14 |
| Abbindezeit | s | 46 | 46 | 45 | 46 |
| Klebfreizeit | s | 65 | 69 | 92 | 55 |
| Kernrohdichte | kg/m³ | 37,0 | 37,3 | 37,7 | 37,5 |
| Schaumdruck | hPa | 266,0 | 248,0 | 192,0 | 382,0 |
| Maximale Kerntemperatur | °C | 170,1 | 170,3 | 166,0 | 175,3 |
| Eindrucktiefe nach 2,5 min | mm | 9,0 | 9,5 | 13,0 | 7,0 |
| Eindrucktiefe nach 5 min | mm | 10,0 | 10,5 | 13,5 | 7,5 |

Aus Tabelle 1 ist ersichtlich, dass bei der Verwendung von Kaliumformiat weniger Pentan als Treibmittel nötig ist, um die Ziel-Rohdichte von ca. 37 kg/m³ zu erzielen. Gleichzeitig zeichnen sich das erfindungsgemäße Beispiel 4 mit Kaliumformiat als PIR-Katalysator zum Zeitpunkt der Schaumreaktion durch höhere Schaumdrücke und höhere Kerntemperaturen aus. Desweiteren ist ersichtlich, dass das Fließverhalten in Gegenwart von Kaliumformiat als Katalysator im Vergleich zu Kaliumacetat optimiert werden kann. Dies spiegelt sich durch kürzere Startzeiten bei sonst gleichen Abbindezeiten wieder (Vergleichsbeispiele 1* und 2* vs. erfindungsgemäßes Beispiel 4).

Nur im Fall des Einsatzes von Kaliumformiat können gleichzeitig höhere Schaumdrücke und besseres Fließverhalten gefunden werden. Im Fall von Kalium-2-ethylhexanoat (Vergleichsbeispiel 3*) sind zwar auch kürzere Startzeiten zu verzeichnen, allerdings weisen die Schäume geringere Schaumdrücke auf. Außerdem verfügen Schäume, die mit Kaliumformiat hergestellt wurden, über eine verbesserte Aushärtung (quantifiziert durch die Eindrucktiefe eines Gewichts nach 2,5 und 5 min).

### Beispiele 5 - 12): Herstellung von Pentan-getriebenen Schäumen, mit Kaliumcarboxylat-Katalysatoren, mit Amin - Katalysator

Die Herstellung dieser Schäume erfolgte analog den Beispielen 1 - 4) mittels Handvermischung im Labormaßstab (Formulierungen und Reaktionseigenschaften siehe Tabelle 2).

Beispiele 5 - 9) werden dabei über die Pentanmenge auf ungefähr die gleiche Kernrohdichte von ca. 38 kg/m³ eingestellt. In den Beispielen 9) und 10) sowie in Beispielen 11) und 12) wurden andere Polyolformulierungen, die sich in der Zusammensetzung des Hauptpolyols (Polyol P2 = aromatischer Polyester, Polyol P 3 aliphatischer Polyester) unterscheiden, verwendet. Es ist jeweils zu erkennen, dass bei Verwendung von Kaliumformiat (Beispiele 10) und 12)) anstelle von Kaliumacetat die Rohdichte des Hartschaums bei konstanter Treibmittelmenge um 1,5 bis 2,1 kg/m³ sinkt und gleichzeitig der Schaumdruck um ca. 35 bzw. ca. 70 hPa steigt. Des Weiteren ist zu erkennen, dass Schäume, die mithilfe von Kaliumformiat hergestellten wurden, bei gleichzeitig niedrigeren Dichten verbesserte Aushärteeigenschaften (siehe Eindrucktiefe) besitzen wie diejenigen der mit Kaliumacetat katalysierten PUR/PIR-Schäume.

**Tabelle 2: Herstellung und Eigenschaften von Pentan-getriebenen Schäumen, mit Kaliumcarboxylat-Katalysatoren, mit Amin-Katalysator**

| **Formulierung** | **Einheit** | **Beispiel 5*** | **Beispiel 6*** | **Beispiel 7*** | **Beispiel 8** | **Beispiel 9*** | **Beispiel 10** | **Beispiel 11*** | **Beispiel 12** |
|---|---|---|---|---|---|---|---|---|---|
| B1.a-P1 | pbw | 66,5 | 66,5 | 66,5 | 66,5 | | | | |
| B1.a-P2 | pbw | | | | | 83,0 | 83,0 | | |
| B1.a-P3 | pbw | | | | | | | 83,0 | 83,0 |
| B1.b-P4 | pbw | 5,2 | 5,2 | 5,2 | 5,2 | 5,2 | 5,2 | 5,2 | 5,2 |
| B3.b-1 | pbw | 20,8 | 20,8 | 20,8 | 20,8 | 9,5 | 9,5 | 9,5 | 9,5 |
| B3.b-2 | pbw | 5,2 | 5,2 | 5,2 | 5,2 | | | | |
| B1.c-P6 | pbw | 2,3 | 2,3 | 2,3 | 2,3 | 2,3 | 2,3 | 2,3 | 2,3 |
| B3.a-1 | pbw | 3,0 | 3,0 | 3,0 | 3,0 | 3,0 | 3,0 | 3,0 | 3,0 |
| B2.b-1 | pbw | 1,2 | 1,2 | 1,2 | 1,2 | 1,2 | 1,2 | 1,2 | 1,2 |
| B2.c-1 | pbw | 3,5 | | | | 4,20 | | 4,60 | |
| B2.c-2 | pbw | | 3,6 | | | | | | |
| B2.c-3 | pbw | | | 3,5 | | | | | |
| B2.a-1 | pbw | | | | 1,9 | | 2,50 | | 3,00 |
| A-1 | pbw | 184,1 | 184,6 | 167,0 | 180,9 | 200,0 | 200,0 | 200,0 | 200,0 |
| C-1 | pbw | 14,4 | 14,4 | 13,6 | 13,3 | 14,9 | 14,9 | 14,9 | 14,9 |
| C-1 | wt-% | 4,7 | 4,7 | 4,7 | 4,4 | 4,6 | 4,6 | 4,6 | 4,6 |
| Index | | 330,0 | 330,0 | 330,0 | 330,0 | 305,6 | 310,5 | 325,9 | 328,0 |
| Startzeit | s | 13 | 13 | 11 | 12 | 13 | 11 | 14 | 12 |
| Abbindezeit | s | 46 | 47 | 47 | 46 | 37 | 36 | 37 | 38 |
| Klebfreizeit | s | 90 | 92 | 126 | 84 | 48 | 44 | 47 | 45 |
| Kernrohdichte | kg/m^3 | 38,5 | 37,6 | 38,4 | 38,3 | 39,8 | 38,2 | 38,9 | 36,8 |
| Schaumdruck | hPa | 228,0 | 188 | 173 | 247 | 242 | 278 | 286 | 355 |
| Maximale Kerntemperatur | °C | 166,2 | 166,3 | 165 | 167,2 | 175,4 | 177,7 | 171 | 174,2 |
| Eindrucktiefe nach 2,5 min | mm | 13,5 | 16,5 | 18 | 11,5 | 4,2 | 3,9 | 6,0 | 5,8 |
| Eindrucktiefe nach 5 min | mm | 14,5 | 17,5 | 19,5 | 12,0 | 5,0 | 4,8 | 7,0 | 6,3 |

### Beispiele 13 - 15): Herstellung von Pentan-getriebenen Schäumen, mit Kaliumcarboxylat-Katalysatoren, ohne Amin - Katalysator und Carbamat

Die Herstellung dieser Schäume erfolgte analog den Beispielen 1 - 4) mittels Handvermischung im Labormaßstab (Formulierungen und Reaktionseigenschaften siehe Tabelle 3). Es ist zu erkennen, dass der positive Effekt sowohl auf den Schaumdruck als auch auf die Aushärtung in Gegenwart von Carbamat besonders groß ist.

**Tabelle 3: Herstellung und Eigenschaften von Pentan-getriebenen Schäumen, mit Kaliumcarboxylat-Katalysatoren, mit 2-Hydroxyethylcarbamat**

| **Formulierung, Reaktionseigenschaften** | **Einheit** | **Beispiel 13*** | **Beispiel 14*** | **Beispiel 15*** | **Beispiel 16** |
|---|---|---|---|---|---|
| B1.a-P1 | pbw | 66,5 | 66,5 | 66,5 | 66,5 |
| B1.b-P4 | pbw | 5,2 | 5,2 | 5,2 | 5,2 |
| B3.b-1 | pbw | 20,8 | 20,8 | 20,8 | 20,8 |
| B3.b-2 | pbw | 5,2 | 5,2 | 5,2 | 5,2 |
| B1.c-P6 | pbw | 2,3 | 2,3 | 2,3 | 2,3 |
| B3.a-1 | pbw | 3,0 | 3,0 | 3,0 | 3,0 |
| Carbamat | pbw | 1,5 | 1,5 | 1,5 | 1,5 |
| B2.c-1 | pbw | 4,800 | | | |
| B2.c-2 | pbw | | 4,800 | | |
| B2.c-3 | pbw | | | 4,200 | |
| B2.a-1 | pbw | | | | 3,400 |
| A-1 | pbw | 211,2 | 211,0 | 186,9 | 214,7 |
| C-1 | pbw | 15,5 | 15,5 | 14,3 | 14,7 |
| C-1 | wt-% | 4,6 | 4,6 | 4,6 | 4,4 |
| Index | | 330,0 | 330,0 | 330,0 | 330,0 |
| Startzeit | s | 14 | 12 | 11 | 13 |
| Abbindezeit | s | 47 | 46 | 46 | 45 |
| Klebfreizeit | s | 62 | 67 | 88 | 54 |
| Kernrohdichte | kg/m^3 | 36,7 | 36,3 | 36,8 | 37,2 |
| Schaumdruck | hPa | 308 | 287 | 237 | 392 |
| Max. Kerntemperatur | °C | 173,9 | 174,4 | 169,8 | 179,4 |
| Eindrucktiefe nach 2,5 min | mm | 9,5 | 10,5 | 12,0 | 6,0 |
| Eindrucktiefe nach 5 min | mm | 10,5 | 11,5 | 13,0 | 6,5 |

Alle erfindungsgemäßen Beispiele weisen im Vergleich mit anderen Kaliumcarboxylat - katalysierten Schäumen eine Verkürzung der Klebfreizeit auf. Dies kann überraschend nur bei wasserfrei bzw. nahezu wasserfrei getriebenen Schäumen beobachtet werden, wie die folgenden Vergleichsbeispiele 17* und 18* (Tabelle 4) belegen.

### Beispiele 17 - 18): Herstellung von Pentan-getriebenen Schäumen, mit Kaliumcarboxylat-Katalysatoren, wasserhaltig (nicht erfindungsgemäß)

Die Herstellung dieser Schäume erfolgte analog den Beispielen 1 - 4) mittels Handvermischung im Labormaßstab (Formulierungen und Reaktionseigenschaften siehe Tabelle 4).

**Tabelle 4: Herstellung und Eigenschaften von Pentan-getriebenen Schäumen, mit Kaliumcarboxylat-Katalysatoren, wasserhaltig**

| **Formulierung, Reaktionseigenschaften** | **Einheit** | **Beispiel 17*** | **Beispiel 18*** |
|---|---|---|---|
| B1.a-P3 | pbw | 73,0 | 73 |
| B1.b-P5 | pbw | 12,0 | 12 |
| B3.b-1 | pbw | 15 | 15 |
| Wasser | pbw | 0,80 | 0,80 |
| B3.a-1 | pbw | 3,00 | 3,00 |
| B2.b-1 | pbw | 1,20 | 1,20 |
| B2.c-1 | pbw | 3,50 | |
| B2.a-1 | pbw | | 2,3 |
| A-1 | pbw | 202,75 | 201,87 |
| C-1 | pbw | 13,30 | 12,30 |
| C-1 | wt-% | 4,10 | 3,80 |
| Index | | 350,0 | 350,0 |
| Startzeit | s | 13 | 13 |
| Abbindezeit | s | 38 | 38 |
| Klebfreizeit | s | 43 | 45 |
| Kernrohdichte | kg/m^3 | 40,2 | 40,7 |

Bei den Vergleichsbeispielen 17* und 18* (wasserhaltig) kann bei Einsatz von Kaliumformiat zwar ein erhöhter Schaumdruck, jedoch keine Verkürzung der Klebfreizeit gefunden werden.

## Patentansprüche

1. Verfahren zur Herstellung von Polyurethan/Polyisocyanurat (PUR/PIR) - Hartschaumstoffen umfassend den Schritt i) Umsetzung eines Reaktionsgemisches enthaltend
A) eine Polyisocyanatkomponente und
B) eine Isocyanat-reaktive Komponente umfassend
B1) eine Polyolkomponente,
B2) eine Katalysatorkomponente,
B3) gegebenenfalls Hilfs- und Zusatzstoffe, und
C) ein physikalisches Treibmittel
**dadurch gekennzeichnet,**
**dass** die Katalysatorkomponente Kaliumformiat B2.a) enthält, und
**dass** das Reaktionsgemisch aus Schritt i) weniger als 0,3 Gew.-% Wasser und weniger als 0,2 Gew.-% Ameisensäure enthält, und
wobei das Reaktionsgemisch aus Schritt i) einen Isocyanat-Index von ≥ 150 aufweist.

2. Verfahren gemäß Anspruch 1, wobei das Reaktionsgemisch weniger als 0,20 Gew.-% Wasser und keine Ameisensäure enthält.

3. Verfahren gemäß Anspruch 1 oder 2, wobei die Komponente B) 0,1 - 4,0 Gew.-% Kaliumformiat B2.a), bezogen auf ihr Gesamtgewicht, enthält.

4. Verfahren gemäß Anspruch 3, wobei die isocyanat-reaktive Komponente B)
B1.a) mindestens ein Polyol ausgewählt aus der Gruppe bestehend aus Polyesterpolyolen und Polyetheresterpolyolen
B1.b) gegebenenfalls weitere Polyole ausgewählt aus der Gruppe bestehend aus Polyetherpolyolen, Polycarbonatpolyolen und Polyether-Polycarbonatpolyolen und
B1.c) gegebenfalls weitere isocyanat-reaktive Komponenten
umfasst.

5. Verfahren gemäß Anspruch 4, wobei das Polyesterpolyol B1.a) in einem Anteil von 55,0-98,0 Gew.-%, bezogen auf das Gesamtgewicht der Komponente B1) enthalten ist.

6. Verfahren gemäß Anspruch 1, **gekennzeichnet dadurch, dass** die Komponente B) des Reaktionsgemisches
- 50,0 bis 90,0 Gew.-% wenigstens eines Polyesterpolyols und/oder Polyetheresterpolyols B1.a) mit einer Hydroxylzahl im Bereich von 80 mg KOH/g bis 290 mg KOH/g bestimmt gemäß DIN 53240,
- 1,0 bis 10,0 Gew.-% wenigstens eines Polyetherpolyols B1.b) mit einer Hydroxylzahl im Bereich von 300 mg KOH/g bis 600 mg KOH/g bestimmt gemäß DIN 53240,
- 0,0 bis 5,0 Gew.-%, niedermolekulare Isocyanat-reaktive Verbindungen B1.c) mit einer Molmasse Mₙ kleiner als 400 g/mol,
- 1,0 bis 30,0 Gew.-% wenigstens eines Flammschutzmittels B.3),
- 0,1 bis 4,0 Gew.-% Kaliumformiat B.2a) wobei die Angaben in Gew.-% jeweils auf alle Komponenten der isocyanat-reaktiven Zusammensetzung B) bezogen sind,
enthält
und die Komponente A) ein Gemisch von Diphenylmethan-4,4'-diisocyanat mit Isomeren und höherfunktionellen Homologen enthält, und
das Reaktionsgemisch einen Isocyanat-Index ≥ 150 bis ≤ 450 aufweist.

7. Verfahren gemäß einem der vorangehenden Ansprüche, **dadurch gekennzeichnet, dass** die Katalysatorkomponente B2) 15 - 100 Gew.-% Kaliumformiat und 0 - 85 Gew.-% eines aminischen Katalysator B2.b) enthält.

8. Verfahren gemäß einem der vorangehenden Ansprüche, wobei das Reaktionsgemisch weiterhin ein Carbamat enthält.

9. Verfahren gemäß einem der vorangehenden Ansprüche, **dadurch gekennzeichnet, dass** das Reaktionsgemisch ein Flammschutzmittel ausgewählt aus der Gruppe bestehend aus Tris(chloro-2-propyl)-phosphat (TCPP), Triethylphosphat (TEP) und Mischungen daraus enthält.

10. Verfahren gemäß einem der vorangehenden Ansprüche, **dadurch gekennzeichnet dass** das Treibmittel C) ein physikalisches Treibmittel ausgewählt ist aus einer oder mehreren Verbindungen aus der Gruppe enthaltend Kohlenwasserstoffe, halogenierten Ethern und (per)fluorierte Kohlenwasserstoffe, insbesondere Pentanisomere und/oder (hydro)fluorierte Olefine.

11. Verfahren gemäß einem der vorangehenden Ansprüche, weiterhin umfassend den Schritt ii) Aufbringen des Reaktionsgemisches mittels einer Gießvorrichtung auf eine bewegte Deckschicht.

12. Verfahren gemäß dem vorangehenden Anspruch, **dadurch gekennzeichnet, dass** das Verfahren kontinuierlich durchgeführt wird.

13. Polyurethan/Polyisocyanaurat-Hartschaum, erhältlich nach einem Verfahren gemäß einem der Ansprüche 1 - 12.

14. Verbundelemente, enthaltend eine oder zwei Deckschichten und einen Polyurethan/Polyisocyanurat-Hartschaum gemäß Anspruch 13.

15. Verwendung eines Verbundelements gemäß Anspruch 14, **dadurch gekennzeichnet, dass** mindestens eine Deckschicht aus Metall ist, für die Herstellung von ebenen oder linierten Wandelementen oder profilierten Dachelementen für den Industriehallen- und Kühlhausbau, oder für LKW-Aufbauten, Hallentüren oder Transportcontainer.
